(19) Europäisches Patentamt
European Patent Office
Office européen des brevets

(11) EP 3 392 287 A1

(12) EUROPÄISCHE PATENTANMELDUNG

(43) Veröffentlichungstag:
**24.10.2018 Patentblatt 2018/43**

(51) Int Cl.:
***C08G 59/62*** (2006.01) ***C08G 59/50*** (2006.01)

(21) Anmeldenummer: **17166964.1**

(22) Anmeldetag: **19.04.2017**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **HILTI Aktiengesellschaft**
**9494 Schaan (LI)**

(72) Erfinder:
- **Behrens, Nicole**
**81245 München (DE)**
- **Bornschlegl, Alexander**
**81245 München (DE)**

(74) Vertreter: **Hilti Aktiengesellschaft**
**Corporate Intellectual Property**
**Feldkircherstrasse 100**
**Postfach 333**
**9494 Schaan (LI)**

(54) **MEHRKOMPONENTEN-EPOXIDHARZMASSE UND VERFAHREN ZUR STEUERUNG DER AUSHÄRTEZEIT EINER EPOXIDHARZMASSE**

(57) Die Erfindung betrifft Verfahren zur Steuerung der Aushärtezeit einer Epoxidharzmasse, die eine Epoxidharzkomponent (A) mit einem härtbaren Epoxidharz und eine Härterkomponente (B) umfasst, die mindestens ein Amin als Härter und ein Novolakharz als Beschleuniger enthält, wobei das Novolakharz ein unsubstituiertes Phenolnovolakharz umfasst und das unsubstituierte Phenolnovolakharz zur Verlangsamung der Aushärtung teilweise oder ganz durch ein alkylsubstituiertes Phenolnovolakharz ersetzt wird.

EP 3 392 287 A1

## Beschreibung

Die Erfindung betrifft eine Mehrkomponenten-Epoxidharzmasse und ein Verfahren zur Steuerung der Aushärtezeit der Epoxidharzmasse. Ferner betrifft die Erfindung die Verwendung eines Alkylphenol-Novolakharzes in einer Härterkomponente für die Epoxidharzmasse.

Mehrkomponenten-Mörtelmassen auf der Grundlage von härtbaren Epoxidharzen und Aminhärtern sind seit langem bekannt und werden als Klebstoffe, Spachtelmassen zur Rissverfüllung und chemische Dübel zur Befestigung von Konstruktionselementen wie Ankerstangen, Bewehrungseisen und Schrauben in Bohrlöchern verschiedenen Untergrunds verwendet. Zur Anwendung auf Baustellen im Freien müssen die Mörtelmassen einerseits auch bei tiefen Temperaturen gut handhabbar sein und sollen andererseits bei erhöhten Temperaturen ein nur geringes Kriechen zeigen. Gleichzeitig sollen die Mörtelmassen aber eine lange Verarbeitungsdauer besitzen und im einem breiten Temperaturbereich schnell und vollständig aushärten, wobei die ausgehärteten Mörtelmassen auch bei feuchten Bohrlöchern und tiefen Temperaturen hohe Lastwerte erzielen und eine gute Wärmeformbeständigkeit aufweisen sollen.

Diese zum Teil widersprüchlichen Eigenschaftsprofile sind nicht ohne weiteres zu erfüllen. So ist es bei herkömmlichen Mörtelmassen üblich, zur Erzielung einer guten Handhabbarkeit bei tiefen Temperaturen einen hohen Anteil von niedrigviskosen Bestandteilen, einen geringen Füllstoffanteil und grobe Füllstoffe vorzusehen, was allerdings für ein geringes Kriechverhalten unter Last bei erhöhten Temperaturen von Nachteil ist. Andererseits wird eine lange Verarbeitungszeit durch einen hohen Anteil an nicht reaktiven bzw. nicht vernetzenden Verdünnern und wenig reaktiven Komponenten erreicht, was einer kurzen Aushärtezeit entgegensteht.

Mörtelmassen auf Epoxid-Amin-Basis weisen außerdem eine langsame Aushärtekinetik, eine verlängerte Topf- bzw. Gelzeit sowie gewöhnlich eine geringe Wärmebeständigkeit und Kriechfestigkeit auf. Dies führt dazu, dass sie nur in einem engen Temperaturbereich gut handhabbar sind und gute Lastwerte erreichen.

Das Einstellen der Aushärtezeit von Mörtelmassen auf Epoxid-Amin-Basis erfolgt in der Regel durch die Auswahl eines entsprechenden Amins und/oder durch Zugabe von Katalysatoren wie beispielsweise tertiären Aminen, Alkoholen und Säuren. Des Weiteren können Novolakharze als Beschleuniger in der Härterkomponente zugegeben werden.

Die EP 2 826 796 A1 beschreibt die Verwendung einer Härterzusammensetzung für Mehrkomponenten-Mörtelmassen auf Epoxid-Amin-Basis zur chemischen Befestigung von Konstruktionselementen. Die Mehrkomponenten-Mörtelmasse umfasst eine Epoxidharzkomponente (A), die als härtbare Verbindung mindestens ein Epoxidharz und gegebenenfalls mindestens einen Reaktivverdünner enthält, und eine Härterkomponente (B), die einen Hybridhärter enthält, wobei die Epoxidharzkomponente (A) und/oder die Härterkomponente (B) gegebenenfalls weitere Bestandteile ausgewählt unter anorganischen und/oder organischen Verbindungen enthalten können. Der Hybridhärter ist ein Gemisch aus mindestens einem aliphatischen, alicyclischen oder aromatischen Amin als Härter und einem Novolakharz als Beschleuniger. Die Verwendung des Hybridhärters soll zu einer schnellen Aushärtung der Mehrkomponenten-Mörtelmasse auch bei tiefen Temperaturen unter vollständiger Durchhärtung der Mörtelmasse führen.

Die EP 2 826 801 A1 betrifft latente Härter für einkomponentige Epoxidharzmassen mit verbesserter Lagerstabilität und einem vergleichsweise geringen Anteil an Epoxidverbindung im Bereich von weniger als 10 Gewichtsprozent der Masse. Die latenten Härter werden in Pulverform als Mischkristalle spezieller Amine und Polyphenolharzmassen bereitgestellt. Die latenten Härter ergeben bei Raumtemperatur lagerstabile Massen und führen zur raschen Härtung der Epoxidharzmassen bei Temperaturen über 100 °C.

Die WO 2012/067270 A1 betrifft ebenfalls latente Härter für Einkomponenten-Epoxidharzmassen. Die Epoxidharzmassen umfassen ein flüssiges Epoxidharz, eine geeignete Menge eines latenten Härters zur Härtung des Epoxidharzes bei erhöhter Temperatur und nicht mehr als 30 Gewichtsteile eines flüssigen Phenolharzes.

Die Verwendung unterschiedlicher Amine zur Einstellung der Aushärtezeit von Epoxid-Amin-Mörtelmassen beinhaltet gewisse Nachteile. Härterzusammensetzungen mit 1,3-Cyclohexan-bis(methylamin) in Kombination mit einem Novolakharz als Beschleuniger führen zu einer sehr schnellen Aushärtung der Mörtelmasse, während Massen mit 1,2-Diamino-cyclohexan nur sehr langsam aushärten. Die Verwendung verschiedener Amine führt allerdings zu unterschiedlichen Aminäquivalentmassen (AHEW) des Härters in der Härterkomponente (B), so dass zur Anpassung an die Epoxidäquivalentmasse (EEW) der Epoxidharzkomponente (A) die gesamte Rezeptur geändert werden muss. Durch die Rezepturänderung werden wiederum die Eigenschaften der ausgehärteten Mörtelmasse beeinflusst.

Tertiäre Amine, Alkohole und Säuren, die als Beschleuniger verwendet werden können, haben schon aufgrund der zugesetzten Menge einen Einfluss auf die Rezeptur der Epoxidharz-Mörtelmasse. Eine Änderung der Anteile dieser Komponenten in der Mörtelmasse hat in der Regel jedoch deutliche Veränderungen der Endeigenschaften der ausgehärteten Mörtelmasse zur Folge. Insbesondere sind hier Änderungen der Lastwerte des ausgehärteten Mörtels zu beobachten.

Darüber hinaus ist ein hoher Anteil an bestimmten Phenolen in der Mörtelmasse unerwünscht, da diese als CMR-Stoff (Carcinogenic, Mutagenic and toxic to Reproduction) eingestuft sind und daher ein Gesundheitsrisiko für den Anwender bedeuten können.

Die Aufgabe der Erfindung besteht darin, eine gezielte Einstellung der Aushärtezeit einer Epoxidharz-Mörtelmasse mit möglichst geringer Veränderung der Endeigenschaften der ausgehärteten Mörtelmasse zu ermöglichen.

Eine weitere Aufgabe kann darin bestehen, einen als CMR-Stoff eingestuften Bestandteil der Mörtelmasse durch eine nicht oder weniger toxische Verbindung zu ersetzen.

Die der Erfindung zugrunde liegende Aufgabe wird durch ein Verfahren gemäß Anspruch 1 gelöst. Bevorzugte Ausführungsformen des erfindungsgemäßen Verfahrens sind in den Unteransprüchen angegeben, die wahlweise miteinander kombiniert werden können.

Gegenstand der Erfindung ist ferner eine Mehrkomponenten-Epoxidharzmasse gemäß nachstehendem Anspruch 13.

Bevorzugte Ausführungsformen der erfindungsgemäßen Epoxidharzmasse sind in den Unteransprüchen angegeben, die wahlweise miteinander kombiniert werden können.

Im Stand der Technik werden Phenol- und Alkylphenol-Novolake als gleichwertig einsetzbar beschrieben. Überraschenderweise wurde gefunden, dass sich die Aushärtezeit einer Mörtelmasse auf Epoxid-Amin-Basis durch einen wenigstens teilweisen Austausch dieser Novolake gezielt einstellen lässt, ohne dabei die Rezeptur und die Eigenschaften der ausgehärteten Mörtelmasse zu beeinflussen.

Ein weiterer Vorteil liegt darin, dass der Anteil an Phenolnovolakharzen in der Härterkomponente verringert werden kann. Phenolnovolake können herstellungsbedingt einen Anteil an freiem Phenol enthalten, das wesentlich toxischer ist als Alkylphenole und insbesondere Kresol.

Das Verfahren zur Steuerung der Aushärtezeit einer Epoxidharzmasse umfasst erfindungsgemäß die folgenden Schritte:

a) Bereitstellen einer Epoxidharzkomponente (A), die wenigstens ein härtbares Epoxidharz und wahlweise einen Reaktivverdünner enthält;

b) Bereitstellen einer ersten Härterkomponente (B'), die wenigstens ein Amin und wenigstens ein Novolakharz enthält, wobei das Amin ausgewählt ist aus der Gruppe bestehend aus aliphatischen, alicyclischen und aromatischen Aminen, und pro Molekül im Mittel mindestens zwei an ein Stickstoffatom gebundene reaktive Wasserstoffatome aufweist, und wobei das Novolakharz ein unsubstituiertes Phenolnovolakharz ist;

c) Bereitstellen mindestens einer weiteren Härterkomponente (B"), die das wenigstens eine Amin der ersten Härterkomponente sowie ein Novolakharz enthält, wobei das Novolakharz ein alkylsubstituiertes Phenolnovolakharz ist, das wahlweise im Gemisch mit dem unsubstituierten Phenolnovolakharz vorliegt; und

d) Abmischen der ersten Härterkomponente (B') und/oder der weiteren Härterkomponente (B") mit der Epoxidharzkomponente (A) unter Bildung einer gemischten Epoxidmasse und Aushärten der gemischten Epoxidharzmasse,

dadurch gekennzeichnet, dass zum Abmischen in Schritt d) wenigstens eine der ersten Härterkomponente (B') und der zweiten Härterkomponente (B") ausgewählt wird, um die Aushärtung der gemischten Epoxidharzmasse zu steuern, wobei für eine langsamere Aushärtung der Epoxidmasse das unsubstituierte Phenolnovolakharz ganz oder teilweise durch das alkylsubstituierte Phenolnovolakharz ersetzt wird.

Die vorliegende Erfindung ermöglicht so die Einstellung der Aushärtezeit einer Mörtelmasse auf Epoxid-Amin-Basis bei minimaler Änderung der Rezeptur der Mörtelmasse. Durch den wenigstens teilweisen Austausch des Phenolnovolakharzes gegen ein alkylsubstituiertes Phenolnovolakharz werden die Endeigenschaften der ausgehärteten Mörtelmasse, insbesondere die Auszugsfestigkeit, nicht verändert. Die erste und die weitere Härterkomponente unterscheiden sich nur hinsichtlich des Anteils an unsubstituiertem Phenolnovolakharz und alkylsubstituiertem Phenolnovolakharz. Der Anteil an Novolakharz insgesamt ist gleich. Auch alle übrigen Bestandteile der ersten und der zweiten Härterkomponente sind gleich und liegen in den beiden Härterkomponenten vorzugsweise in gleichen Anteilsverhältnissen vor.

Der Austausch des unsubstituierten Phenolnovolakharzes in der ersten Härterkomponente (B') gegen das alkylsubstituierte Phenolnovolakharz unter Verwendung der weiteren Härterkomponente (B") kann vollständig oder zu Teilen erfolgen, je nachdem welche Aushärtezeit der Mörtelmasse gewünscht ist. Wird nur die erste Härterkomponente (B') verwendet, ist die Aushärtezeit der gemischten Mörtelmasse am kürzesten. Wird die erste Härterkomponente (B') vollständig gegen die weitere Härterkomponente (B") ausgetauscht, die nur das alkylsubstituierte Phenolnovolakharz als Beschleuniger enthält, kann die Aushärtezeit auf einen Maximalwert verlängert werden. Falls der Anteil an freiem Phenol in der Mörtelmasse verringert werden soll, das in der ersten Härterkomponente (B') vorliegt, kann eine weitere Härterkomponente (B") gewählt oder zugemischt werden, so dass eine Mörtelmasse mit einem reduzierten Anteil an unsubstituiertem Phenolnovolakharz erhalten wird, deren Aushärtezeit vom Anwender noch toleriert wird.

Da die Eigenschaften der Phenolnovolake und der alkylsubstituierten Phenolnovolake nahezu identisch sind, abgesehen vom Einfluss auf die Aushärtezeit der Mörtelmasse, sind auch die Endeigenschaften der ausgehärteten Mörtelmasse unabhängig von der Art des verwendeten Novolakharzes.

Gemäß einer ersten bevorzugten Ausführungsform der Erfindung besteht das Novolakharz in der weiteren Härterkomponente (B") aus dem alkylsubstituierten Phenolnovolakharz. Die erste Härterkomponente (B') und die weitere

Härterkomponente (B") können in verschiedenen Gebindegrößen bereitgestellt werden. Der Anwender kann dann aus den jeweiligen Gebinden der ersten Härterkomponente (B') und der weiteren Härterkomponente (B") diejenigen Gebinde auswählen und zusammenstellen, mit denen das gewünschte Anteilsverhältnis von unsubstituiertem Phenolnovolakharz und alkylsubstituiertem Phenolnovolakharz und damit die gewünschte Aushärtezeit der Epoxidharzmasse erreicht wird. Die Gebinde der ersten Härterkomponente (B') und der weiteren Härterkomponente (B") können beispielsweise jeweils etwa 50 Volumenprozent der zur vollständigen Aushärtung der Epoxidharzkomponente (A) notwendigen Härterkomponente enthalten. Damit kann der Anwender durch Kombination von zwei Gebinden der Härterkomponenten (B') und (B") drei verschiedenen Aushärtezeiten der Epoxidharzmasse einstellen, je nachdem ob eine Kombination (B')/(B'), (B')/(B") oder (B")/(B") gewählt wird. Durch Bereitstellung von kleineren Gebindegröße ist eine noch feinere Abstufung der Aushärtezeiten möglich.

Gemäß einer weiteren bevorzugten Ausführungsform der Erfindung enthält die weitere Härterkomponente (B") ein Gemisch aus dem unsubstituierten Phenolnovolakharz und dem alkylsubstituierten Phenolnovolakharz in einem vorbestimmten Gewichtsverhältnis. Die Härterkomponente (B) wird in diesem Fall als ein Satz von vorgemischten weiteren Härterkomponenten (B") mit unterschiedlichen Anteilen an unsubstituiertem Phenolnovolakharz und alkylsubstituiertem Phenolnovolakharz bereitgestellt. Der Anwender kann dann je nach der gewünschten Aushärtezeit zwischen den verschiedenen weiteren Härterkomponenten (B") wählen. Beispielsweise kann es für den Anwender sinnvoll sein, bei tiefen Umgebungstemperaturen entweder nur die erste Härterkomponente (B') oder eine weitere Härterkomponente (B") mit hohem Anteil an unsubstituiertem Phenolnovolakharz zu wählen, die eine schnelle Aushärtung der Epoxidmasse ergeben, während bei höheren Umgebungstemperaturen eine weitere Härterkomponente (B") gewählt werden kann, in der das Novolakharz einen hohen Anteil an alkylsubstituiertem Phenolnovolakharz enthält oder daraus besteht, und die eine lange Aushärtezeit ergibt, um die Topfzeit der Epoxidharzmasse zu verlängern.

Bevorzugt liegen bei dieser Ausführungsform das unsubstituierte Phenolnovolakharz und das alkylsubstituierte Phenolnovolakharz in der weiteren Härterkomponente (B") in einem Gewichtsverhältnis von zwischen 95:5 und 5:95 vor, beispielsweise in Abmischungen mit einem Gewichtsverhältnis des unsubstituierten Phenolnovolakharzes und des alkylsubstituierten Phenolnovolakharzes von 5:95, 10:90, 15:85, 20:80, 25:75, 30:70, 35:65, 40:60, 45:55, 50:50, 55:45, 60:40, 65:35, 70:30, 75:25, 80:20, 85:15, 90:10 oder 95:5.

Gegenstand der vorliegenden Erfindung ist deshalb auch eine zur Durchführung des obigen Verfahrens geeignete Mehrkomponenten-Epoxidharzmasse, bevorzugt eine Zweikomponenten-Epoxidharzmasse mit, einer Epoxidharzkomponente (A), die wenigstens ein härtbares Epoxidharz enthält, wenigstens eine Härterkomponente (B), die mindestens ein Amin und ein Novolakharz enthält, wobei das Amin ausgewählt ist aus der Gruppe bestehend aus aliphatischen, alicyclischen und aromatischen Aminen, und pro Molekül im Mittel mindestens zwei an ein Stickstoffatom gebundene reaktive Wasserstoffatome aufweist, dadurch gekennzeichnet, dass die Härterkomponente (B) als ein Satz von verschiedenen Härterkomponenten vorliegt, in denen das Novolakharz aus einem unsubstituierten Phenolnovolakharz und/oder einem alkylsubstituierten Phenolnovolakharz besteht, wobei sich die verschiedenen Härterkomponenten in einem Anteilsverhältnis des unsubstituierten Phenolnovolakharzes zu dem alkylsubstituierten Phenolnovolakharzes unterscheiden, und wobei das Anteilsverhältnis von 100:0 bis 0:100 beträgt.

Die Mehrkomponenten-Epoxidmasse wird bevorzugt für Bauzwecke eingesetzt. Der Begriff "für Bauzwecke" bedeutet das Baukleben von Beton/Beton, Stahl/Beton oder Stahl/Stahl oder einer der genannten Materialien auf anderen mineralischen Materialien, die strukturelle Verstärkung von Bauteilen aus Beton, Mauerwerk und anderen mineralischen Materialien, die Armierungsanwendungen mit faserverstärkten Polymeren von Bauobjekten, die chemische Befestigung auf Oberflächen aus Beton, Stahl oder anderen mineralischen Materialien, insbesondere die chemische Befestigung von Konstruktionselementen und Verankerungsmitteln, wie Ankerstangen, Ankerbolzen, (Gewinde)stangen, (Gewinde)hülsen, Betoneisen, Schrauben und dergleichen, in Bohrlöchern in verschiedenen Untergründen, wie (Stahl)beton, Mauerwerk, anderen mineralischen Materialien, Metallen (z.B. Stahl), Keramiken, Kunststoffen, Glas und Holz.

Gemäß einer bevorzugten Ausführungsform umfasst der Satz von Härterkomponenten (B) wenigstens eine erste Härterkomponente (B'), in der das Novolakharz aus dem unsubstituierten Phenolnovolakharz besteht, und eine weitere Härterkomponente (B"), in der das Novolakharz aus dem alkylsubstituierten Phenolnovolakharz besteht, wahlweise im Gemisch mit dem unsubstituierten Phenolnovolakharz. Hinsichtlich aller weiteren Bestandteile und deren Anteile sind die jeweiligen Härterkomponentem (B') und (B") gleich zusammengesetzt.

Bevorzugt besteht das Novolakharz in der weiteren Härterkomponente (B") aus dem alkylsubstituierten Novolakharz. Die erste Härterkomponente (B') und die weitere Härterkomponente (B") können in verschiedenen Gebindegrößen vorliegen, die in Kombination die zur vollständigen Aushärtung der Epoxidharzmasse erforderliche Menge an Härterkomponente (B) ergeben.

Gemäß einer weiteren bevorzugten Ausführungsform umfasst der Satz von Härterkomponenten (B) neben der ersten Härterkomponente (B') wenigstens eine weitere Härterkomponente (B"), in der das Novolakharz ein Gemisch aus dem unsubstituierten Phenolnovolakharz und dem alkylsubstituierte Phenolnovolakharz ist. Das unsubstituierte Phenolnovolakharz und das alkylsubstituierte Phenolnovolakharz liegen in der weiteren Härterkomponente (B") bevorzugt in einem vordefinierten Anteilsverhältnis von 95:5 bis 5:95 vor. Der Satz von Härterkomponenten (B) kann mehrere

weitere Härterkomponenten (B") umfassen, die sich jeweils im Anteilsverhältnis des unsubstituierten Phenolnovolakharzes und des alkylsubstituierten Phenolnovolakharzes unterscheiden und im Übrigen gleich zusammengesetzt sind.

Soweit im Folgenden nichts Anderes angegeben ist, gelten die Ausführungen zur Zusammensetzung der Härterkomponente (B) entsprechend auch für die erste Härterkomponente (B') und die weitere Härterkomponente (B").

Als härtbares Epoxid in der Epoxidharzkomponente (A) kommt eine Vielzahl der hierfür dem Fachmann bekannten und kommerziell erhältlichen Verbindungen in Betracht, die im Mittel mehr als eine Epoxid-Gruppe, vorzugsweise zwei Epoxid-Gruppen, pro Molekül enthalten. Diese Epoxidharze können sowohl gesättigt als auch ungesättigt sowie aliphatisch, alicyclisch, aromatisch oder heterocyclisch sein und auch Hydroxylgruppen aufweisen. Sie können weiterhin solche Substituenten enthalten, die unter den Mischungs- oder Reaktionsbedingungen keine störenden Nebenreaktionen verursachen, beispielsweise Alkyl- oder Arylsubstituenten, Ethergruppen und ähnliche. Im Rahmen der Erfindung sind auch trimere und tetramere Epoxide geeignet.

Vorzugsweise handelt es sich bei den Epoxidharzen um Glycidylether, die sich von mehrwertigen Alkoholen, insbesondere von mehrwertigen Phenolen wie beispielsweise Bisphenolen und Novolaken, ableiten, insbesondere solchen mit einer durchschnittlichen Glycidylgruppenfunktionalität von 1,5 oder größer, insbesondere von 2 oder größer, beispielsweise von 2 bis 10.

Die Epoxidharze können ein Epoxyäquivalentgewicht (EEW) von 120 bis 2000 g/EQ aufweisen, vorzugsweise von 140 bis 400, insbesondere 155 bis 195, beispielsweise 165 bis 185 aufweisen. Es können auch Mischungen mehrerer Epoxidharze verwendet werden.

Beispiele für die zur Herstellung der Epoxidharze eingesetzten mehrwertige Phenole sind Resorcin, Hydrochinon, 2,2-Bis-(4-Hydroxyphenyl)-propan (Bisphenol A), Isomerengemische des Dihydroxyphenylmethans (Bisphenol F), Tetrabrom-Bisphenol A, Novolake, 4,4'-Dihydroxyphenylcyclohexan und 4,4'-Dihydroxy-3,3'-dimethyldiphenylpropan.

Bevorzugt ist das Epoxidharz ein Diglycidylether von Bisphenol A oder von Bisphenol F oder einem Gemisch davon. Besonders bevorzugt werden flüssige Diglycidylether auf Basis von Bisphenol A und/oder F mit einem Epoxyäquivalentgewicht von 180 bis 190 g/EQ verwendet.

Weitere Beispiele sind Hexandioldiglycidylether, Trimethylolpropan-triglycidylether, Bisphenol-A-Epichlorhydrinharze und/oder Bisphenol-F-Epichlorhydrinharze, beispielsweise mit einem durchschnittlichen Molekulargewicht von Mn $\leq$ 2000 g/mol.

Der Anteil an Epoxidharz beträgt >0 bis 100 Gew.-%, bevorzugt 10 bis 70 Gew.-% und besonders bevorzugt 30 bis 60 Gew.-%, bezogen auf das Gesamtgewicht der Harzkomponente (A).

Neben den Epoxidharzen kann die Epoxidharzkomponente (A) wahlweise mindestens einen Reaktivverdünner enthalten. Als Reaktivverdünner werden Glycidylether von aliphatischen, alicyclischen oder aromatischen Mono- oder insbesondere Polyalkoholen verwendet, die eine geringere Viskosität als aromatische Gruppen enthaltende Epoxide aufweisen. Beispiele für Reaktivverdünner sind Monoglycidylether, z.B. o-Kresylglycidylether, und Glycidylether mit einer Epoxid-Funktionalität von mindestens 2, wie 1,4-Butandioldiglycidylether (BDDGE), Cyclohexandimethanoldiglycidylether und Hexandioldiglycidylether, sowie Tri- oder höhere Glycidylether, wie Glycerintriglycidylether, Pentaerythrittetraglycidylether oder Trimethylolpropantriglycidylether (TMPTGE). Es können auch Mischungen von zwei oder mehr dieser Reaktivverdünner verwendet werden, vorzugsweise Triglycidylether enthaltende Mischungen, besonders bevorzugt als Gemisch aus 1,4-Butandioldiglycidylether (BDDGE) und Trimethylolpropantriglycidylether (TMPTGE).

Die Reaktivverdünner liegen bevorzugt in einer Menge von 0 bis 60 Gew.-% vor, insbesondere von 1 bis 20 Gew.-%, bezogen auf das Gesamtgewicht der Harzkomponente (A).

Der Anteil der Epoxidkomponente (A) an der Gesamtmasse der Mehrkomponenten-Mörtelmasse beträgt vorzugsweise 5 bis 90 Gew.-%, insbesondere 20 bis 80 Gew.-%, 30 bis 70 Gew.-% oder 40 bis 60 Gew.-%.

Geeignete Epoxidharze und Reaktivverdünner sind auch in dem Standardwerk von Michael Dornbusch, Ulrich Christ und Rob Rasing, "Epoxidharze", Vincentz Network GmbH & Co KG (2015), ISBN 13: 9783866308770, zu finden. Diese Verbindungen werden hier durch Bezugnahme aufgenommen.

Die Härterkomponente (B) umfasst wenigstens ein Amin als Härter für das Epoxidharz und wenigstens ein Novolakharz als Beschleuniger, sowie wahlweise einen Co-Beschleuniger.

Die als Härter für das Epoxidharz in Mehrkomponenten-Mörtelmassen geeigneten Amine sind dem Fachmann bekannt. Insbesondere sind die Amine aus der aus den aliphatischen, alicyclischen und aromatischen Aminen bestehenden Gruppe ausgewählt, wobei das Amin im Mittel mindestens zwei reaktive Wasserstoffatome, gebunden an ein Stickstoffatom, pro Molekül aufweist. Hierunter fallen auch Polyamine mit mindestens zwei Aminogruppen im Molekül.

Als Härter für Epoxidharze geeignete Amine sind beispielsweise 1,2-Diaminoethan(ethylendiamin), 1,2-Propandiamin, 1,3-Propandiamin, 1,4-Diaminobutan, 2,2-Dimethyl-1,3-propandiamin(neopentandiamin), Diethylaminopropylamin (DEAPA), 2-Methyl-1,5-diaminopentan, 1,3-Diaminopentan, 2,2,4- oder 2,4,4-Trimethyl-1,6-diaminohexan und Gemische davon (TMD), 1-Amino-3-aminomethyl-3,5,5-trimethylcyclohexan, 1,3-Bis(aminomethyl)-cyclohexan, 1,2-Bis(aminomethyl)cyclohexan, Hexamethylendiamin (HMD), 1,2-und 1,4-Diaminocyclohexan (1,2-DACH und 1,4-DACH), Bis(4-aminocyclohexyl)methan, Bis(4-amino-3-methylcyclohexyl)methan, Diethylentriamin (DETA), 4-Azaheptan-1,7-diamin, 1,11-Diamino-3,6,9-trioxundecan, 1,8-Diamino-3,6-dioxaoctan, 1,5-Diamino-methyl-3-azapentan, 1,10-Diamino-4,7-dioxadecan, Bis(3-aminopropyl)amin, 1,13-Diamino-4,7,10-trioxatridecan, 4-Aminomethyl-1,8-diaminooctan, 2-Butyl-2-ethyl-1,5-diaminopentan, N,N-Bis-(3-aminopropyl)methylamin, Triethylentetramin (TETA), Tetraethylenpentamin (TEPA), Pentaethylenhexamin (PEHA), Bis(4-amino-3-methylcyclohexyl)methan, 1,3-Benzoldimethanamin (m-Xylylendiamin, mXDA), 1,4-Benzoldimethanamin (p-Xylylendiamin, pXDA), 5-(Aminomethyl)bicyclo[[2.2.1]hept-2-yl]methylamin (NBDA, Norbornandiamin), Dimethyldipropylentriamin, Dimethylaminopropylaminopropylamin (DMAPAPA), 3-Aminomethyl-3,5,5-trimethylcyclohexylamin (Isophorondiamin (IPD)), Diaminodicyclohexylmethan (PACM), gemischte polycyclische Amine (MPCA) wie z.B. Ancamine® 2168, Dimethyldiaminodicyclohexylmethan (Laromin® C260), 2,2-Bis(4-aminocyclohexyl)propan und (3(4),8(9)Bis(aminomethyl)dicyclo[5.2.1.02,6]decan (Isomerengemisch tricyclischer primärer Amine; TCD-Diamin).

Ein bevorzugtes Amin ist 1,3-Cyclohexandimethanamin.

Das Amin kann entweder alleine oder als Gemisch aus zwei oder mehr der genannten Amine eingesetzt werden. Als vorteilhaft hat sich ein Amin-Gemisch erwiesen, das aus zwei oder mehr Aminen zusammengesetzt ist, wobei die Amine bevorzugt aus der Gruppe der unverzweigten oder verzweigten $C_2$-$C_{10}$-Alkyldiamine, der $C_2$-$C_{10}$-Polyalkylen-Polyamine und der aromatischen Amine ausgewählt sind, welche bevorzugt einen substituierten oder unsubstituierten Benzolring enthalten. Der Begriff aromatisches Amin, wie er hierin verwendet wird, soll auch Amine umfassen, bei denen die Aminogruppe nicht direkt an einen Benzolring gebunden ist, sondern an eine weitere Gruppe, wie etwa eine Alkylgruppe, die an den Benzolring angebunden ist, so dass die Alkylgruppe zwischen dem Benzolring und der Aminogruppe angeordnet ist, wie z.B. araliphatische Amine.

Die Alkyldiamine sind bevorzugt unter 2,2,4- oder 2,4,4-Trimethyl-1,6-diaminohexan und Gemischen davon (TMD), 1-Amino-3-aminomethyl-3,5,5-trimethylcyclohexan (IPDA), 1,3-Bis(aminomethyl)-cyclohexan (1,3-BAC), 1,4-Bis(aminomethyl)-cyclohexan (1,4 - BAC), 2-Methyl-1,5-pentandiamin (DYTEK A), (3(4),8(9)Bis(aminomethyl)dicyclo[5.2.1.02,6]decan und Isomerengemischen davon (TCD-Diamin), Aminomethyltricyclo[5.2.1.02,6]decan und Isomerengemischen davon (TCD-Amin) und 1,6-Hexamethylendiamin ausgewählt.

Die Poylalkylen-Polyamine sind bevorzugt unter Diethylentriamin (DETA), Triethylentetramin (TETA), Tetraethylenpentamin (TEPA) und Pentaethylenhexamin (PEHA) ausgewählt.

Die aromatischen Amine sind bevorzugt araliphatische Amine und unter 1,3-Benzoldimethanamin (mXDA) und 1,4-Benzoldimethanamin (pXDA) und N,N'-Dimethyl-1,3-benzoldimethanamin ausgewählt.

Ein besonders bevorzugtes Gemisch aus zwei Aminen ist ein Gemisch aus 2-Methyl-1,5-pentandiamin und 1,3-Benzoldimethanamin.

Ein alternatives, besonders bevorzugtes Gemisch aus vier Aminen ist ein Gemisch aus Trimethylhexamethylendiamin (TMD), 2-Methylpentandiamin (DYTEK A), Triethylentetramin (TETA) und 1,3-Benzoldimethanamin (mXDA).

Als weiteren Bestandteil enthält die Härterkomponente (B) ein Novolakharz als Beschleuniger für die Epoxidhärtung durch das Amin. Novolakharze werden durch saure Kondensation von unsubstituiertem Phenol oder substituierten Phenolderivaten mit einem Aldehyd, insbesondere Formaldehyd, erhalten, wobei das Aldehyd/Phenol-Verhältnis kleiner als 1:1 beträgt.

Die erfindungsgemäß in der Härterkomponente (B) als Beschleuniger eingesetzten Novolakharze entsprechen bevorzugt der folgenden allgemeinen Formel

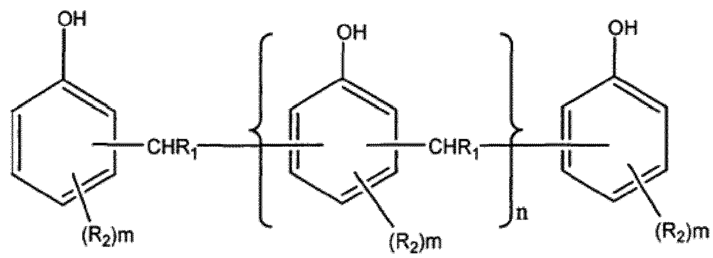

worin

$R_1$ H, Alkyl oder Aryl bedeutet,
$R_2$ eine $C_1$-$C_{10}$-Alkylgruppe bedeutet;
m = 0 - 3 ist und
n = 1 - 20 ist.

Vorzugsweise ist $R_1$ = H, und n = 1 - 15.

Erfindungsgemäß ist das Novolakharz in der ersten Härterkomponente (B') ein unsubstituiertes Phenolnovolakharz. Das unsubstituierte Phenolnovolakharz entspricht vorzugsweise der obigen allgemeinen Formel (I), worin $R_1$

= H bedeutet, m = 0 und n = 1-20 ist.

Bevorzugte alkylsubstituierte Phenolnovolakharze in der weiteren Härterkomponente (B") sind solche, bei denen der obigen allgemeinen Formel m = 1 oder 2 ist, besonders bevorzugt m = 1 ist, n = 1 bis 20 ist und weiter bevorzugt $R_2$ ein Methylrest ($-CH_3$) ist.

Weiter bevorzugt als Bestandteil der weiteren Härterkomponente (B") sind alkylsubstituierte Phenolnovolakharze, bei denen in der obigen allgemeinen Formel m = 1 ist und der Rest $R_2$ einen tert-Butylrest oder einen unverzweigten oder verzweigten $C_1$-$C_{10}$-Alkylrest bedeutet.

Besonders bevorzugt ist das alkylsubstituierte Phenolnovolakharz ein Kresolnovolakharz, bei dem in der obigen allgemeinen Formel m = 1 und n = 1 bis 20 ist, und der Rest $R_2$ einen Methylrest bedeutet.

In einer bevorzugten Ausführungsform beträgt der Anteil des Novolakharzes in jeder der Härterkomponenten 5 bis 30 Gewichtsprozent, bezogen auf das Gesamtgewicht der jeweiligen Härterkomponente, vorzugsweise 10 bis 25 Gewichtsprozent, weiter bevorzugt von 10 bis 20 Gewichtsprozent.

Das Novolakharz wird vorzugsweise in einer Menge von 10 bis 45 Gew.-%, bevorzugt 15 bis 45 Gew.-%, weiter bevorzugt 20 bis 35 Gew.-% und am meisten bevorzugt 20 bis 30 Gew.-%, bezogen auf das Gesamtgewicht von Amin und Novolakharz in der Härterkomponente (B), eingesetzt. Die Menge sollte 45 Gew.-% nicht übersteigen, um bei Raumtemperatur eine flüssige Härterkomponente zu erhalten, die auch bei tiefen Temperaturen hinreichend niedrigviskos ist, und um die Auspresseigenschaften der Härterkomponente nicht negativ zu beeinflussen. Falls der Anteil an Novolakharz im Gemisch aus Amin und Novolakharz unter 10 Gew.-% liegt, kann eine Beschleunigung der Epoxidhärtung kaum mehr beobachtet werden und der positive Effekt des Novolakharzes auf die Aushärtung der Epoxidharzmasse bei Temperaturen unter +10°C kommt kaum noch zum Tragen.

Die erste Härterkomponente (B') und die weitere Härterkomponente (B") weisen jeweils die gleiche Zusammensetzung auf. Alle Bestandteile der ersten Härterkomponente (B') und der weiteren Härterkomponente (B") liegen jeweils in gleichen Gewichtsverhältnissen vor. Die erste Härterkomponente (B') und die weitere Härterkomponente (B") unterscheiden sich somit nur durch den teilweisen oder vollständigen Austausch des unsubstituierten Phenolnovolakharzes in der Komponente (B') gegen das alkylsubstituierte Phenolnovolakharz in der Komponente (B").

In einer weiteren Ausführungsform kann die Härterkomponente (B) einen Co-Beschleuniger enthalten. Als Co-Beschleuniger können beispielsweise tertiäre Amine, Imidazole oder tertiäre Aminophenole, Organophosphine, Lewis-Basen oder-Säuren wie Phosphorsäureester, oder Gemische von zwei oder mehr davon verwendet werden. Die Co-Beschleuniger können auch in der Epoxidharzkomponente (A) vorliegen, soweit sie mit den Epoxidharzen verträglich sind.

Bevorzugt sind die Co-Beschleuniger in der Härterkomponente (B) in einem Gewichtsanteil von 0,001 bis 5 Gew.-% enthalten, bezogen auf das Gesamtgewicht der Härterkomponente (B).

Beispiele für geeignete Co-Beschleuniger sind insbesondere Tris-2,4,6-dimethylaminomethylphenol, 2,4,6-Tris(dimethylamino)phenol und Bis[(dimethylamino)methyl]phenol. Ein geeignetes Co-Beschleunigergemisch enthält 2,4,6-Tris(dimethylaminomethyl)phenol und Bis(dimethylaminomethyl)phenol. Solche Gemische sind kommerziell erhältlich, beispielsweise als Ancamine® K54 (AirProducts, Belgien).

Des Weiteren können die Epoxidharzkomponente (A) und/oder die Härterkomponente (B) übliche Zusätze enthalten, insbesondere Haftvermittler und Füllstoffe.

Durch den Einsatz eines Haftvermittlers wird die Vernetzung der Bohrlochwand mit der Mörtelmasse verbessert, so dass sich die Haftung im ausgehärteten Zustand erhöht. Geeignete Haftvermittler sind aus der Gruppe der Silane ausgewählt, die mit weiteren reaktiven organischen Gruppen funktionalisiert sind, wie beispielsweise 3-Glycidoxypropyltrimethoxysilan, 3-Glycidoxypropyltriethoxysilan, 2-(3,4-Epoxycyclohexyl)ethyltrimethoxysilan, N-2-(Aminoethyl)-3-aminopropylmethyl-diethoxysilan, N-2-(Aminoethyl)-3-aminopropyltriethoxysilan, 3-Aminopropyltrimethoxysilan, 3-Aminopropyltriethoxysilan, N-Phenyl-3-aminoethyl-3-aminopropyl-trimethoxysilan, 3-Mercaptopropyltrimethoxysilan und 3-Mercaptopropylmethyldimethoxysilan. Als Haftvermittler sind insbesondere 3-Aminopropyl-triethoxysilan und 3-Glycidiloxypropyl-trimethoxysilan bevorzugt.

Der Haftvermittler kann in einer Menge bis zu 10 Gew.-%, bevorzugt 0,1 bis 5 Gew.-%, bezogen auf das Gesamtgewicht der Epoxidharzkomponente (A), enthalten sein.

Als Füllstoffe dienen bevorzugt anorganische Füllstoffe, insbesondere Zemente wie Portlandzement oder Tonerdeszement sowie andere hydraulisch abbindende anorganische Stoffe, Quarz, Glas, Korund, Porzellan, Steingut, Schwerspat, Leichtspat, Gips, Talkum und/oder Kreide sowie deren Mischungen. Die anorganischen Füllstoffe können in Form von Sanden, Mehlen oder Formkörpern, vorzugsweise in Form von Fasern oder Kugeln, zugesetzt werden. Die Füllstoffe können in einer oder in allen Komponenten der Mehrkomponenten-Mörtelmasse vorhanden sein. Der Anteil an Füllstoffen beträgt vorzugsweise 0 bis 90 Gew.-%, beispielsweise 10 bis 90 Gew.-%, bevorzugt 15 bis 75 Gew.-% und weiter bevorzugt 20 bis 50 Gew.-%, weiter bevorzugt 25 bis 30 Gew.-%, bezogen auf das Gesamtgewicht der Mörtelmasse.

Weitere denkbare Zusätze zur Mehrkomponenten-Mörtelmasse sind ferner Thixotropiermittel wie gegebenenfalls organisch nachbehandelte pyrogene Kieselsäure, Bentonite, Alkyl- und Methylcellulosen und Rhizinusölderivate,

Weichmacher wie Phthalsäure- oder Sebacinsäureester, Stabilisatoren, Antistatikmittel, Verdickungsmittel, Flexibilisatoren, Härtungskatalysatoren, Rheologiehilfsmittel, Netzmittel, färbende Zusätze wie Farbstoffe oder Pigmente, beispielsweise zum unterschiedlichen Anfärben der Komponenten zur besseren Kontrolle von deren Durchmischung, ebenso wie Netzmittel, Phlegmatisiermittel, Dispergiermittel und weitere Steuerungsmittel für die Reaktionsgeschwindigkeit, oder Gemische von zwei oder mehreren davon.

Auch nicht reaktive Verdünnungsmittel (Lösungsmittel) können vorzugsweise in einer Menge bis zu 30 Gew.-% enthalten sein, bezogen auf die das Gesamtgewicht der jeweiligen Komponente (Epoxidharz- und/oder Härterkomponente), beispielsweise von 1 bis 20 Gew.-%. Beispiele für geeignete Lösungsmittel sind Niederalkylketone wie Aceton, Diniederalkyl-niederalkanoylamide wie Dimethylacetamid, Niederalkylbenzole wie Xylole oder Toluol, Phthalsäureester oder Paraffine.

Derartige weitere Zusätze können vorzugsweise in Gewichtsanteilen von insgesamt 0 bis 40 % zugesetzt sein, bezogen auf das Gesamtgewicht der Mörtelmasse.

Die Mehrkomponenten-Mörtelmasse liegt vorzugsweise in Patronen, Kartuschen oder Folienbeuteln vor, die dadurch gekennzeichnet sind, dass sie zwei oder mehrere voneinander getrennte Kammern umfassen, in welchen die Epoxidharzkomponente (A) und die ausgewählte Härterkomponente (B) der Mörtelmasse reaktionsinhibierend voneinander getrennt angeordnet sind.

Zur bestimmungsgemäßen Anwendung werden die Epoxidharzkomponente (A) und die ausgewählte Härterkomponente (B) aus den getrennten Kammern entleert und in einer geeigneten Vorrichtung, beispielsweise einem Statikmischer oder einem Dissolver, gemischt. Die Mischung aus Epoxidharzkomponente (A) und Härterkomponente (B) wird danach mittels einer bekannten Injektionsvorrichtung in das zuvor gereinigte Bohrloch eingebracht. Anschließend wird das zu fixierende Bauteil in die Mörtelmasse eingesetzt und justiert. Die reaktiven Bestandteile der Härterkomponente (B) reagieren mit den Epoxiden der Harzkomponente (A) unter Polyaddition, sodass die Mörtelmasse unter Umgebungsbedingungen innerhalb einer gewünschten Zeit, vorzugsweise innerhalb weniger Minuten oder Stunden, aushärtet.

Weitere Vorteile der Erfindung ergeben sich aus den nachfolgenden Beispielen, die jedoch in keiner Weise als einschränkend zu verstehen sind.

**Herstellungsbeispiele**

Probenzubereitung

Epoxidharzkomponente (A):

Als Epoxidharze wurden in den Beispielen 1 bis 3 die im Handel unter den Bezeichnungen DER 330 und DER 354 (Dow Europe) erhältlichen Bisphenol A-basierten beziehungsweise Bisphenol F-basierten Epoxidharze verwendet.

Als Haftvermittler wurde 3-Glycidyloxypropyl-trimethoxysysilan erhältlich unter der Bezeichnung Dynalsylan GLYMO™ (Evonik Industries) verwendet.

Als Reaktivverdünner wurden die im Handel unter den Bezeichnungen Polypox™ R3 (Dow Europe) und Araldite™ DY-T (Huntsman) erhältlichen 1,4-Butanediol-diglycidylether und Trimethyolpropan-triglycidylether verwendet.

Die flüssigen Komponenten wurden per Hand vorgemischt. Anschließend wurden als Füllstoff Quarz (Millisil™ W12 der Firma Quarzwerke Frechen) und als Verdicker Kieselsäure (Cab-O-Sil™ TS- 720 der Firma Cabot Rheinfelden) zugegeben und im Dissolver (PC Laborsystem, Volumen 1 L) 10 min lang unter Vakuum bei 3500 U/min gerührt.

| Stoff | Funktion | Gewichtsanteile |
|---|---|---|
| 3-Glycidyloxypropyl-trimethoxysysilan | Haftvermittler | 2,5 |
| Bisphenol A-basiertes Epoxidharz | Epoxidharz | 30 |
| Bisphenol F-basiertes Epoxidharz | Epoxidharz | 17 |
| 1,4-Butanediol-diglycidylether | Reaktivverdünner | 6 |
| Trimethyolpropan-triglycidylether | Reaktivverdünner | 6 |
| Quarz | Füllstoff | 36 |
| Kieselsäure | Verdicker | 2,5 |

Härterkomponente (B):

Das jeweilige Novolakharz wurde in den flüssigen Bestandteilen, dem Aminhärter und Haftvermittler, per Hand vorgemischt und gelöst. Der für die Härterkomponente (B') verwendete Phenol-Novolak ist unter dem Handelsnamen Phenolite™ TD-2131 der Firma DIC Europe erhältlich. Der für die Härterkomponente (B") verwendete Kresol-Novalak ist unter dem Handelsnamen Phenolite™ KA-1163 der Firma DIC Europe erhältlich.

Zusätzlich wurde zu den Härterkomponenten als Beschleuniger jeweils ein Gemisch von 2,4,6-Tris(dimethylaminomethyl)phenol und Bis[(dimethylamino)-methyl]phenol zugegeben, das unter dem Handelsnamen Ancamine™ K45 der Firma Air Products erhältlich ist.

Als Aminhärter wurde 1,3-Cyclohexandimethanamin verwendet, erhältlich unter dem Handelsnamen 1,3-BAC der Firma Itochu Deutschland.

Als Haftvermittler wurde 3-Aminopropyl-triethoxysilan verwendet, das unter dem Handelsnamen Dynasylan AMEO der Firma Evonik Degussa erhältlich ist.

Danach wurden das Quarzmehl und die Kieselsäure zugegeben, wie oben bereits für die Epoxidharzkomponente (A) beschrieben, und das Gemisch wurde im Dissolver (PC Laborsystem, Volumen 1 L) 10 min lang unter Vakuum bei 3500 U/min gerührt.

**Beispiel 1:**

Härterkomponente (B') mit Phenol-Novolak

| **Bestandteile** | **Funktion** | **Gewichtsanteile** |
|---|---|---|
| 1,3-Cyclohexandimethanamin | Aminhärter | 43 |
| 3-Aminopropyl-triethoxysilan | Haftvermittler | 2,4 |
| Phenol-Novolak | Beschleuniger | 12 |
| 2,4,6-Tris(dimethylaminomethyl)phenol, Bis[(dimethylamino)methyl]phenol | Beschleuniger | 2 |
| Quarz | Füllstoff | 38 |
| Kieselsäure | Verdicker | 2,6 |

**Beispiel 2:**

Härterkomponente (B") mit Kresol-Novolak

| **Bestandteile** | **Funktion** | **Gewichtsanteile** |
|---|---|---|
| 1,3-Cyclohexandimethanamin | Aminhärter | 43 |
| 3-Aminopropyl-triethoxysilan | Haftvermittler | 2,4 |
| Kresol-Novolak | Beschleuniger | 12 |
| 2,4,6-Tris(dimethylaminomethyl)-phenol, Bis[(dimethylamino)methyl]phenol | Beschleuniger | 2 |
| Quarz | Füllstoff | 38 |
| Kieselsäure | Verdicker | 2,6 |

**Beispiel 3:**

Die Härterkomponente (B''') besteht in diesem Ausführungsbeispiel aus einer 1:1-Mischung (Gewichtsanteile) der Härterkomponente (B') aus Beispiel 1 und der Härterkomponente (B") Beispiel 2.

Bestimmung der Aushärtungszeit

Zur Bestimmung der Aushärtungszeit wurde der Gelpunkt der Mörtelmasse rheologisch bestimmt. Dazu wurden das Speichermodul und das Verlustmodul der Mörtelmasse gemessen:

Die Epoxidharzkomponente (A) und die Härterkomponenten (B'), (B") und (B''') der Beispiele 1 bis 3 wurden jeweils im Volumenverhältnis 3:1 im Speedmixer 30 sec lang bei 1500 U/min gemischt. Als Messgerät wurde ein Rheometer der Firma Malvern Kinexus, Einweg-Platte-Platte-Messsystem mit einem Druckmesser von 25 mm und einem Spaltabstand 1 mm verwendet. Die Messung erfolgte jeweils bei einer Temperatur von 25°C mit den folgenden Parametern:

Oszillationsschritt 1:

Frequenz 1 Hz,
Deformation 0,5%,
Zahl der Messpunkte 5760,
Messpunktdauer 15 s,
Abbruchkriterium: Speichermodul G' größer als 1E+5Pa für einen Messpunkt, dann Fortführung als nächster Oszillationsschritt.

Oszillationsschritt 2:

Frequenz 1 Hz,
Deformation 0,01%,
Zahl der Messpunkte 5760,
Messpunktdauer 15 s,
Abbruchkriterium: Drehmoment größer als 180 mNm für einen Messpunkt, dann Abbruch der Messung.

Der Zeitpunkt, zu dem Speicher- und Verlustmodul der Mörtelmasse den gleichen Wert erreichen, wird als Gelpunkt in der nachfolgenden Tabelle 1 angegeben.

Tabelle 1: Aushärtezeit der Epoxidharzmassen

| | **Aushärtung (Erreichen des Gelpunkts) [min]:** | |
|---|---|---|
| **Beispiel** | **25°C** | **40°C** |
| 1 | 135 | 52 |
| 2 | 162 | 64 |
| 3 | 147 | 54 |

Bestimmung der Reaktionskinetik durch Temperaturmessung

Härter mit unterschiedlichem Novolakgehalt und unterschiedlichen Novolaken/Novolakmischungen wurden eingesetzt, um die Aushärtung der Mischungen aus Härter und Epoxy-Komponente über ihren Temperaturverlauf zu verfolgen. Dabei zeigte sich, dass der Temperaturverlauf durch die Variation von Novolak und dessen Gehalt in einem weiten Rahmen eingestellt werden kann.

Durchführung der Messung:

Eine Mischung von Komponente A (Rezeptur s. u.) mit jeweils einer der B-Komponenten (Rezepturen s. u.) wurde in ein 20ml Rollrandglas gefüllt.

Das Mischverhältnis in Gramm ergibt sich jeweils aus dem Quotient EEW/AHEW (Werte für diese Größen werden jeweils unter den Rezepturen angegeben). Ein Quotient EEW/AHEW von 158/42,5 (Beispiel 4) ergibt damit ein Mischungsverhältnis von 3,72 g A-Komponente : 1 g B-Komponente.

Der Temperaturfühler wurde mittig im Rollrandglas platziert. Die Temperaturänderung wurde aufgezeichnet (Gerät: Yokogawa, DAQ-Station, Model: DX1006-3-4-2). Die Aushärtung des Mörtels kann durch diese Methode über den Zeitverlauf der Temperaturentwicklung verfolgt werden. Findet eine Beschleunigung der Aushärtung statt, ist das Temperaturmaximum zu kürzeren Zeiten hin verschoben, meist verbunden mit einer höheren Temperatur. Es werden

$t_{+10K}$ (Zeit, nach der eine Temperaturerhöhung um 10 K stattgefunden hat), $T_{max}$ (erreichtes Temperaturmaximum) und $t_{Tmax}$ (Zeit, nach der das Temperaturmaximum erreicht wurde) gemessen.

Die Bestimmung des AHEW (*amine hydrogen equivalent weight,* H-Äquivalente, Menge Harz, die 1 mol reaktives H enthält) erfolgt in für den Fachmann bekannter Weise anhand der Formulierung der Reaktionsmischung aus den bekannten H-Äquivalenten der verwendeten Edukte und Rohstoffe, aus denen sie errechnet werden. Für ein einfaches Amin sei die Errechnung des AHEW am Beispiel von meta-Xylylendiamin ($M_W$ = 136 g/mol, Funktionalität = 4 eq/mol) rein exemplarisch erläutert:

$$\text{Allgemeine Formel: } AHEW = \frac{M_W}{Funktionalität} = \frac{136}{4}\left[\frac{g}{eq}\right] = 34\left[\frac{g}{eq}\right]$$

Die EEW (*epoxide equivalent weight,* Epoxidäquivalentwerte) sind in der Regel auf den Ausgangsmaterialien von den Herstellern angegeben oder sie werden nach bekannten Methoden ermittelt bzw. berechnet. Sie geben die Menge in g Harz an, die 1 Mol Epoxidgruppen enthält.

A-Komponente:

| **Stoff** | **Funktion** | **Gewichtsanteile** | **Handelsname** | **Hersteller** | **Land** |
|---|---|---|---|---|---|
| Bisphenol A-basiertes Epoxidharz | Epoxidharz | 52 | DER 330 | Dow Europe | CH |
| Bisphenol F-basiertes Epoxidharz | Epoxidharz | 28 | DER 354 | Dow Europe | CH |
| 1,4-Butanedioldiglycidyl ether | Reaktivverdünner | 10 | Polypox R3 | Dow Europe | CH |
| Trimethyolpropan-triglycidylether | Reaktivverdünner | 10 | Araldite DY-T | Huntsman | Belgien |

EEW: 158

B-Komponente:

**Beispiel 4:**

| **Stoff** | **Funktion** | **Gewichtsanteile** | **Handelsname** | **Hersteller** | **Land** |
|---|---|---|---|---|---|
| m-Xylylendiamin | Aminhärter | 80 | mXDA | Aldrich | D |
| Phenol-Novolak | Beschleuniger | 20 | Phenolite TD-2131 | DIC Europe | D |

AHEW: 42,5
Masse Komponente A pro g Komponente B: 3,72 g

**Beispiel 5:**

| **Stoff** | **Funktion** | **Gewichtsanteile** | **Handelsname** | **Hersteller** | **Land** |
|---|---|---|---|---|---|
| m-Xylylendiamin | Aminhärter | 80 | mXDA | Aldrich | D |
| Kresol-Novolak | Beschleuniger | 20 | Phenolite KA-1163 | DIC Europe | D |

AHEW: 42,5
Masse Komponente A pro g Komponente B: 3,72 g

**Beispiel 6:**

| Stoff | Funktion | Gewichtsanteile | Handelsname | Hersteller | Land |
|---|---|---|---|---|---|
| m-Xylylendiamin | Aminhärter | 80 | mXDA | Aldrich | D |
| Phenol-Novolak | Beschleuniger | 10 | Phenolite TD-2131 | DIC Europe | D |
| Kresol-Novolak | Beschleuniger | 10 | Phenolite KA-1163 | DIC Europe | D |

AHEW: 42,5
Masse Komponente A pro g Komponente B: 3,72 g

**Beispiel 7:**

| Stoff | Funktion | Gewichtsanteile | Handelsname | Hersteller | Land |
|---|---|---|---|---|---|
| m-Xylylendiamin | Aminhärter | 80 | mXDA | Aldrich | D |
| Phenol-Novolak | Beschleuniger | 15 | Phenolite TD-2131 | DIC Europe | D |
| Kresol-Novolak | Beschleuniger | 5 | Phenolite KA-1163 | DIC Europe | D |

AHEW: 42,5
Masse Komponente A pro g Komponente B: 3,72 g

**Beispiel 8:**

| Stoff | Funktion | Gewichtsanteile | Handelsname | Hersteller | Land |
|---|---|---|---|---|---|
| m-Xylylendiamin | Aminhärter | 80 | mXDA | Aldrich | D |
| Phenol-Novolak | Beschleuniger | 5 | Phenolite TD-2131 | DIC Europe | D |
| Kresol-Novolak | Beschleuniger | 15 | Phenolite KA-1163 | DIC Europe | D |

AHEW: 42,5
Masse Komponente A pro g Komponente B: 3,72 g

**Beispiel 9:**

| Stoff | Funktion | Gewichtsanteile | Handelsname | Hersteller | Land |
|---|---|---|---|---|---|
| m-Xylylendiamin | Aminhärter | 85 | mXDA | Aldrich | D |
| Phenol-Novolak | Beschleuniger | 15 | Phenolite TD-2131 | DIC Europe | D |

AHEW: 40
Masse Komponente A pro g Komponente B: 3,95 g

**Beispiel 10:**

| Stoff | Funktion | Gewichtsanteile | Handelsname | Hersteller | Land |
|---|---|---|---|---|---|
| m-Xylylendiamin | Aminhärter | 75 | mXDA | Aldrich | D |
| Kresol-Novolak | Beschleuniger | 25 | Phenolite KA-1163 | DIC Europe | D |

AHEW: 45,33
Masse Komponente A pro g Komponente B: 3,49 g
Temperaturmessungen während der Aushärtung von Massen mit unterschiedlichen Novolakgehalten:

| | $t_{+10K}$ [h:min:sec] | $T_{max}$[°C] | $t_{Tmax}$ [h:min:sec] |
|---|---|---|---|
| Beispiel 4 | 00:17:39 | 187,5 | 00:47:43 |
| Beispiel 5 | 00:55:05 | 44,1 | 01:50:48 |
| Beispiel 6 | 00:33:37 | 151,4 | 01:07:32 |
| Beispiel 7 | 00:28:07 | 174,0 | 00:58:26 |
| Beispiel 8 | 00:44:05 | 122,2 | 01:30:41 |
| Beispiel 9 | 00:38:28 | 122,0 | 01:30:32 |
| Beispiel 10 | 00:40:34 | 55,5 | 01:42:31 |

In der Tabelle angegeben sind jeweils die Zeit, nach der, ab dem Zeitpunkt des Mischens von Komponente A und B, die Temperatur um 10 K angestiegen ist, die maximal erreichte Temperatur, sowie die Zeit, nach der das Temperaturmaximum erreicht wurde.

Bestimmung der Lastwerte

Die Epoxidharzkomponente (A) und die Härterkomponenten (B') bzw. (B") der Beispiele 1 und 2 wurden jeweils in einem Volumenverhältnis von 3:1 in einer Hartkartusche (RE-Mischer) gemischt. Zur Bestimmung der mit den Mörtelmassen gemäß den Beispielen 1 und 2 erzielten Lastwerte wurde eine hochfeste Ankergewindestange M12 verwendet, die in ein hammergebohrtes Bohrloch mit einem Durchmesser von 14 mm und einer Bohrlochtiefe von 72 mm mit der erfindungsgemäßen Zweikomponenten-Mörtelmasse in C20/25 Beton eingedübelt wurde. Nach einer Aushärtezeit von 24 h bei einer Temperatur von 23°C wurde die Versagenslast durch zentrisches Ausziehen der Ankergewindestange mit enger Abstützung ermittelt. Die mittlere Versagenslast wurde anhand der Ergebnisse von drei Ankern bestimmt.

Die untersuchten Bohrlöcher wurden unter Verwendung eines Hammerbohrers präpariert, und das Bohrloch wurde mit zweimal mit Druckluft (6 bar) gereinigt, zweimal gebürstet und anschließend nochmals zweimal mit Druckluft (6 bar) ausgeblasen.
Die Ergebnisse sind der folgenden Tabelle 2 zu entnehmen:

Tabelle 2: Mittlere Versagenslast der gehärteten Epoxidharzmassen

| Novolak | Auszugskraft [N/mm$^2$] |
|---|---|
| Phenol | 37,3 |
| Kresol | 37,6 |

Die Testergebnisse der rheologischen Messungen (Beispiele 1 bis 3) zeigen, dass durch den vollständigen Ersatz eines Phenolnovolakharzes der Härterkomponente (B') durch ein Kresolnovolakharz als Beschleuniger in der Härterkomponente (B") eine Verlängerung der Aushärtezeit der Mörtelmasse um 27 Minuten bei 25°C erreicht wird. Ein Gemisch von Phenol- und Kresolnovolakharz im Verhältnis 1:1 führt bei konstantem Anteil an Novolakharz (12 Gewichtanteile in der Härterkomponente) und ansonsten gleicher Zusammensetzung der Mörtelmasse zu einer um 13 Minuten

langsameren Aushärtung im Vergleich zu einer Mörtelmasse, die nur das unsubstituierte Phenolnovolakharz als Beschleuniger enthält. Auch bei 40°C härtet die Mörtelmasse mit unsubstituiertem Phenolnovolakharz (Beispiel 1) am schnellsten und die Mörtelmasse mit Kresolnovolakharz (Beispiel 2) am langsamsten aus.

Weiterhin zeigt auch die Messung des Temperaturverlaufs während der Aushärtung (Beispiele 4 bis 10), dass die Zeiten, nach der das Temperaturmaximum erreicht wird, stark vom verwendeten Novolak abhängen. So tritt das Temperaturmaximum bei Einsatz von 20 % Phenolnovolak bereits nach 48 Minuten ein, werden 20 % Kresolnovolak verwendet, so wird das Maximum erst nach fast zwei Stunden erreicht. Eine 1:1-Mischung beider Novolake führt zum Auftreten des Temperaturmaximums nach 68 Minuten. Um zehn Minuten beschleunigen lässt sich die Reaktion durch Verwendung eines Phenol-/Kresol-Novolak-Gemischs (15:5). Wird das Phenol-/Kresol-Verhältnis umgekehrt, tritt die maximale Temperatur erst nach ca. 1,5 Stunden auf (Beispiel 8). Auch eine Veränderung des Novolakgehalts beeinflusst die Aushärtegeschwindigkeit (Beispiele 9 und 10).

Die Bestimmung der Lastwerte zeigt weiter, dass die Eigenschaften der ausgehärteten Mörtelmassen, bei denen das Phenolnovolakharz durch ein Kresolnovolakharz ersetzt wurde, nahezu identisch sind. Die Art des zur Beschleunigung der Epoxidhärtung verwendeten Novolaks beeinflusst somit die Endeigenschaften der ausgehärteten Mörtelmasse nicht.

## Patentansprüche

**1.** Verfahren zur Steuerung der Aushärtezeit einer Epoxidharzmasse, welches die folgenden Schritte umfasst:

a) Bereitstellen einer Epoxidharzkomponente (A), die wenigstens ein härtbares Epoxidharz und wahlweise einen Reaktivverdünner enthält;
b) Bereitstellen einer ersten Härterkomponente (B'), die wenigstens ein Amin und wenigstens ein Novolakharz enthält, wobei das Amin ausgewählt ist aus der Gruppe bestehend aus aliphatischen, alicyclischen und aromatischen Aminen, und pro Molekül im Mittel mindestens zwei an ein Stickstoffatom gebundene reaktive Wasserstoffatome aufweist, und wobei das Novolakharz ein unsubstituiertes Phenolnovolakharz ist;
c) Bereitstellen mindestens einer weiteren Härterkomponente (B"), die das wenigstens eine Amin der ersten Härterkomponente sowie ein Novolakharz enthält, wobei das Novolakharz ein alkylsubstituiertes Phenolnovolakharz ist, das wahlweise im Gemisch mit dem unsubstituierten Phenolnovolakharz vorliegt; und
d) Abmischen der ersten Härterkomponente (B') und/oder der weiteren Härterkomponente (B") mit der Epoxidharzkomponente (A) unter Bildung einer gemischten Epoxidmasse und Aushärten der gemischten Epoxidharzmasse,

**dadurch gekennzeichnet, dass** zum Abmischen in Schritt d) wenigstens eine der ersten Härterkomponente (B') und der zweiten Härterkomponente (B") ausgewählt wird, um die Aushärtung der gemischten Epoxidharzmasse zu steuern, wobei für eine langsamere Aushärtung der Epoxidmasse das unsubstituierte Phenolnovolakharz ganz oder teilweise durch das alkylsubstituierte Phenolnovolakharz ersetzt wird.

**2.** Verfahren nach Anspruch 1, **dadurch gekennzeichnet, dass** die erste Härterkomponente (B') und die weitere Härterkomponente (B") die gleiche Zusammensetzung aufweisen, mit Ausnahme des Anteilsverhältnisses von unsubstituiertem Phenolnovolakharz zu alkylsubstituiertem Phenolnovolakharz.

**3.** Verfahren nach Anspruch 1 oder 2, **dadurch gekennzeichnet, dass** das Novolakharz in der weiteren Härterkomponente (B") aus dem alkylsubstituierten Phenolnovolakharz besteht.

**4.** Verfahren nach Anspruch 3, **dadurch gekennzeichnet, dass** die erste Härterkomponente (B') und die weitere Härterkomponente (B") in verschiedenen Gebindegrößen bereitgestellt werden.

**5.** Verfahren nach Anspruch 1 oder 2, **dadurch gekennzeichnet, dass** das Novolakharz in der weiteren Härterkomponente (B") aus einem Gemisch aus dem unsubstituierte Phenolnovolakharz und dem alkylsubstituierten Phenolnovolakharz besteht.

**6.** Verfahren nach Anspruch 5, **dadurch gekennzeichnet, dass** die weitere Härterkomponente (B") einen Satz von verschiedenen Härterkomponenten mit unterschiedlichen Anteilen von unsubstituiertem Phenolnovolakharz und alkylsubstituiertem Phenolnovolakharz umfasst.

**7.** Verfahren nach Anspruch 5 oder 6, **dadurch gekennzeichnet, dass** das unsubstituierte Phenolnovolakharz und

das alkylsubstituierte Phenolnovolakharz in einem Gewichtsverhältnis von zwischen 95 : 5 und 5 : 95 vorliegen.

**8.** Verfahren nach einem der Ansprüche 1 bis 7, **dadurch gekennzeichnet, dass** das unsubstituierte Phenolnovolakharz der folgenden Formel entspricht

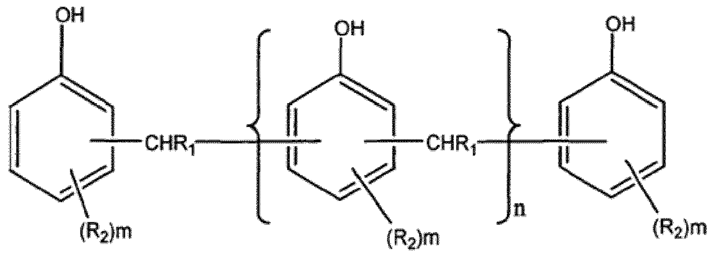

worin

$R_1$ H bedeutet,
m = 0 ist und
n = 1 - 20, bevorzugt 1-15 ist.

**9.** Verfahren nach Anspruch einem der Ansprüche 1 bis 8, **dadurch gekennzeichnet, dass** das alkylsubstituierte Phenolnovolakharz der folgenden Formel entspricht

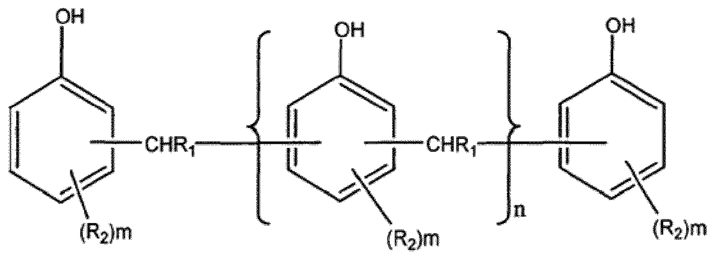

worin

$R_1$ H bedeutet,
$R_2$ $C_1$-$C_{10}$ Alkyl bedeutet,
m = 1 oder 2 ist und
n = 1 - 20, bevorzugt 1-15 ist.

**10.** Verfahren nach Anspruch 9, **dadurch gekennzeichnet, dass** $R_2$ einen Methylrest bedeutet und m = 1 ist.

**11.** Verfahren nach einem der Ansprüche 1 bis 10, **dadurch gekennzeichnet, dass** der Anteil des Novolakharzes in der ersten Härterkomponente (B') und der weiteren Härterkomponente (B") jeweils von 10 bis 45 Gewichtsprozent beträgt, bezogen auf das Gesamtgewicht des Amins und des Novolakharzes, bevorzugt von 20 bis 45 Gewichtsprozent, weiter bevorzugt von 20 bis 35 Gewichtsprozent und am meisten bevorzugt von 20 bis 30 Gewichtsprozent.

**12.** Verfahren nach einem der Ansprüche 1 bis 11, **dadurch gekennzeichnet, dass** der Anteil des Novolakharzes in der ersten Härterkomponente (B') und der weiteren Härterkomponente (B") jeweils von 5 bis 30 Gewichtsprozent beträgt, bezogen auf das Gesamtgewicht der jeweiligen Härterkomponente, vorzugsweise 10 bis 25 Gewichtsprozent, weiter bevorzugt von 10 bis 20 Gewichtsprozent.

**13.** Mehrkomponenten-Epoxidharzmasse zur Durchführung des Verfahrens gemäß einem der vorhergehenden Ansprüche, mit
einer Epoxidharzkomponente (A), die wenigstens ein härtbares Epoxidharz und wahlweise einen Reaktivverdünner enthält,
wenigstens eine Härterkomponente (B), die mindestens ein Amin und ein Novolakharz sowie wahlweise einen Co-Beschleuniger enthält, wobei das Amin ausgewählt ist aus der Gruppe bestehend aus aliphatischen, alicyclischen und aromatischen Aminen, und pro Molekül im Mittel mindestens zwei an ein Stickstoffatom gebundene reaktive Wasserstoffatome aufweist,
**dadurch gekennzeichnet, dass** die Härterkomponente (B) als ein Satz von verschiedenen Härterkomponenten vorliegt, in denen das Novolakharz aus einem unsubstituierten Phenolnovolakharz und/oder einem alkylsubstituierten Phenolnovolakharz besteht, wobei sich die verschiedenen Härterkomponenten in einem Anteilsverhältnis des unsubstituierten Phenolnovolakharzes zu dem alkylsubstituierten Phenolnovolakharzes unterscheiden, und wobei das Anteilsverhältnis von 100:0 bis 0:100 beträgt.

**14.** Mehrkomponenten-Epoxidharzmasse nach Anspruch 13, **dadurch gekennzeichnet, dass** der Satz von Härterkomponenten (B) wenigstens eine erste Härterkomponente (B') und eine weitere Härterkomponente (B") umfasst, wobei das Novolakharz in der ersten Härterkomponente (B') aus dem unsubstituierten Phenolnovolakharz besteht, und wobei das Novolakharz in der weiteren Härterkomponente (B") aus dem alkylsubstituierten Phenolnovolakharz besteht, wahlweise im Gemisch mit dem unsubstituierten Phenolnovolakharz, wobei die erste Härterkomponente (B') die weitere Härterkomponente (B") im Übrigen gleich zusammengesetzt sind.

**15.** Mehrkomponenten-Epoxidharzmasse nach einem der Ansprüche 13 oder 14, wobei die Merhkomponenten-Epoxidharzmasse weitere Zusätze umfasst, die aus der aus Co-Beschleunigern, Haftvermittlern, Reaktivverdünnern, Verdickern und Füllstoffen bestehenden Gruppe ausgewählt sind.

**16.** Verwendung eines alkylsubstituierten Phenolnovolakharzes in einer Härterkomponente für eine Mehrkomponenten-Epoxidharzmasse zur Steuerung der Aushärtezeit der Epoxidharzmasse, wobei die Härterkomponente wenigstens ein Amin und ein Novolakharz enthält, **dadurch gekennzeichnet, dass** das Novolakharz ein unsubstituiertes Phenolnovolakharz umfasst und das unsubstituierte Phenolnovolakharz zur Verlangsamung der Aushärtung teilweise oder ganz durch ein alkylsubstituiertes Phenolnovolakharz ersetzt wird.

Europäisches Patentamt
European Patent Office
Office européen des brevets

# EUROPÄISCHER RECHERCHENBERICHT

Nummer der Anmeldung
EP 17 16 6964

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | EP 2 826 796 A1 (HILTI AG [LI]) 21. Januar 2015 (2015-01-21) * Absätze [0001], [0011], [0012], [0015], [0016], [0043], [0044], [0069] * ----- | 1-16 | INV. C08G59/62 C08G59/50 |
| X | EP 1 674 495 A1 (HUNTSMAN ADV MAT SWITZERLAND [CH]; HUNTSMAN ADVANCED MATERIALS DE [DE]) 28. Juni 2006 (2006-06-28) * Absatz [0010] * ----- | 1-16 | |
| X | US 6 649 729 B1 (SCHERZER WOLFGANG [DE] ET AL) 18. November 2003 (2003-11-18) * Spalte 1, Zeile 61 - Spalte 3, Zeile 5; Beispiele 1-3 * ----- | 1-16 | |
| | | | RECHERCHIERTE SACHGEBIETE (IPC) |
| | | | C08G |

Der vorliegende Recherchenbericht wurde für alle Patentansprüche erstellt

1

| Recherchenort | Abschlußdatum der Recherche | Prüfer |
|---|---|---|
| Den Haag | 26. September 2017 | Hoffmann, Michael |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 17 16 6964

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-09-2017

| Im Recherchenbericht angeführtes Patentdokument | Datum der Veröffentlichung | Mitglied(er) der Patentfamilie | Datum der Veröffentlichung |
|---|---|---|---|
| EP 2826796 A1 | 21-01-2015 | AU 2014292018 A1 | 11-02-2016 |
| | | CA 2918362 A1 | 22-01-2015 |
| | | CN 105377937 A | 02-03-2016 |
| | | EP 2826796 A1 | 21-01-2015 |
| | | EP 2826798 A1 | 21-01-2015 |
| | | EP 3022245 A1 | 25-05-2016 |
| | | HK 1215716 A1 | 09-09-2016 |
| | | JP 2016532742 A | 20-10-2016 |
| | | RU 2016105299 A | 23-08-2017 |
| | | SG 11201600309R A | 26-02-2016 |
| | | US 2016159690 A1 | 09-06-2016 |
| | | WO 2015007879 A1 | 22-01-2015 |
| EP 1674495 A1 | 28-06-2006 | AT 406398 T | 15-09-2008 |
| | | AU 2005318156 A1 | 29-06-2006 |
| | | CN 101128504 A | 20-02-2008 |
| | | EP 1674495 A1 | 28-06-2006 |
| | | EP 1838750 A1 | 03-10-2007 |
| | | ES 2313453 T3 | 01-03-2009 |
| | | JP 5111115 B2 | 26-12-2012 |
| | | JP 2008525553 A | 17-07-2008 |
| | | KR 20070103390 A | 23-10-2007 |
| | | US 2010210758 A1 | 19-08-2010 |
| | | WO 2006067195 A1 | 29-06-2006 |
| US 6649729 B1 | 18-11-2003 | BR 9813419 A | 10-10-2000 |
| | | CN 1281476 A | 24-01-2001 |
| | | EP 1040150 A1 | 04-10-2000 |
| | | ES 2191366 T3 | 01-09-2003 |
| | | JP 4370447 B2 | 25-11-2009 |
| | | JP 2001525469 A | 11-12-2001 |
| | | KR 100571136 B1 | 17-04-2006 |
| | | US 6649729 B1 | 18-11-2003 |
| | | WO 9929757 A1 | 17-06-1999 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 2826796 A1
- EP 2826801 A1
- WO 2012067270 A1


### In der Beschreibung aufgeführte Nicht-Patentliteratur


- **MICHAEL DORNBUSCH ; ULRICH CHRIST ; ROB RASING.** Epoxidharze. Vincentz Network GmbH & Co KG, 2015